# EUROPEAN PATENT APPLICATION

(11) **EP 4 349 621 A1**
(43) Date of publication of application: **10.04.2024**
(21) Application number: 21943513.8
(22) Date of filing: 02.06.2021
(51) Int. Cl.: B60G 15/06, F16C 19/16, F16C 33/62, F16C 33/00

(54) **PILLAR BEARING FOR VEHICLE SUSPENSION, AND MANUFACTURING METHOD FOR BEARING LOWER COVER**

(71) Applicant: Schaeffler Technologies AG & Co. KG, 91074 Herzogenaurach (DE)
(72) Inventor: WU, Yong, Suzhou, Jiangsu 201804 (CN); ZHOU, Yinchu, Shanghai 200335 (CN); SUN, Binbin, Shanghai 201106 (CN); YAN, Liuqing, Shanghai 200032 (CN)
(86) International application number: PCT/CN2021/097890
(87) International publication number: WO 2022/252145

(57) **Abstract**

The present application provides a pillar bearing for a vehicle suspension, comprising a lower cover (1), an upper cover (2) and rolling bodies (3), which are assembled together. The lower cover (1) and the upper cover (2) can rotate relative to each other, and a space for mounting the rolling bodies (3) is defined between the lower cover (1) and the upper cover (2). The lower cover (1) comprises a metal framework (11) and a peripheral structure (12), wherein the peripheral structure (12) is attached to the metal framework (11) in such a manner that same surrounds the metal framework (11), such that the metal framework (11) is embedded inside the peripheral structure (12). In this way, since the metal framework is formed into an integral structure and is integrally embedded in the peripheral structure, it is easy to mount and has low costs, and the structural strength of the bearing is effectively enhanced. Furthermore, the present application further provides the manufacturing method for the lower cover of the above-mentioned pillar bearing for the vehicle suspension, and the lower cover of the pillar bearing for the vehicle suspension is manufactured in a relatively simple manner by means of the steps of stamping and of stretching multiple times.

## Description

### Technical Field

The present application relates to a pillar bearing for a vehicle, and more particularly to a pillar bearing for a vehicle suspension and a manufacturing method for a bearing lower cover.

### Background

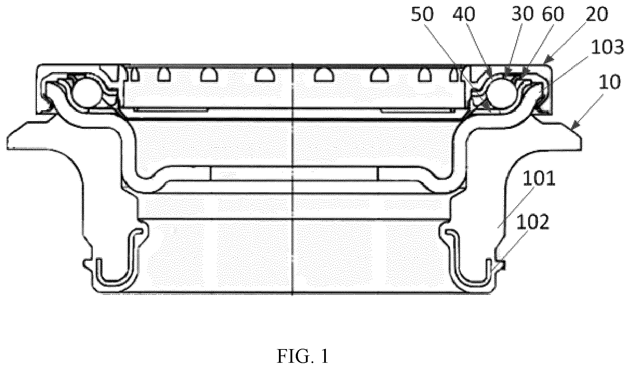

FIG. 1 shows a pillar bearing (e.g., a thrust bearing) for a vehicle suspension. The bearing comprises a lower cover 10, an upper cover 20, a plurality of rolling bodies 30, an upper washer 40, a lower washer 50 and a cage 60, which are assembled together. The bearing has a ring shape as a whole. The lower cover 10, the upper cover 20, the upper washer 40, the lower washer 50 and the cage 60 all extend continuously over an entire circumference along a circumferential direction of the bearing. The lower cover 10 and the upper cover 20 can rotate relative to each other, and a mounting space for mounting the plurality of rolling bodies 30, the upper washer 40, the lower washer 50 and the cage 60 is formed between the lower cover and the upper cover. The upper washer 40 and the lower washer 50 form raceways for the rolling bodies 30 to roll in, and the plurality of rolling bodies 30 are held between the upper washer 40 and the lower washer 50 by the cage 60.

In order to cope with high-load working conditions, as shown in FIG. 1, the lower cover 10 comprises an embedded steel flange 102 and an external steel flange 103, and other parts of the lower cover 10 are made of a high-molecular polymer (plastic). The embedded steel flange 102 is embedded inside a lower cover main body 101 through insertion molding, and the external steel flange 103 is arranged between the lower cover main body 101 and the lower washer 50.

Although the above-mentioned pillar bearing utilizes the embedded steel flange 102 and the external steel flange 103 to improve the overall structural strength, the embedded steel flange and the external steel flange adopt a split-structure design and are arranged at different positions separated from each other of the lower cover 10, thereby resulting in a complicated mounting process and high manufacturing costs for the bearing. Moreover, since the external steel flange 103 is located outside the lower cover main body 101, it generally needs to be coated with an anti-corrosive coating, which may pollute the environment and increase the manufacturing costs.

### Summary

The object of the present application is to overcome or at least alleviate the shortcomings of the above-mentioned prior art, so as to provide a novel pillar bearing for a vehicle suspension, which can reduce the mounting complexity of the pillar bearing and reduce the manufacturing costs. The present application further provides a manufacturing method for a lower cover of the above-mentioned pillar bearing for the vehicle suspension, which allows the lower cover of the above-mentioned pillar bearing for the vehicle suspension to be manufactured in a relatively simple manner.

To achieve the above-mentioned object, the present invention may adopt the following technical solutions.

The present application provides the pillar bearing for the vehicle suspension, comprising a lower cover, an upper cover and rolling bodies, which are assembled together. The lower cover and the upper cover can rotate relative to each other, and a space for mounting the rolling bodies is defined between the lower cover and the upper cover. The lower cover comprises a metal framework and a peripheral structure, wherein the peripheral structure is attached to the metal framework in such a manner that same surrounds the metal framework, such that the metal framework is embedded inside the peripheral structure;
the metal framework is ring-shaped as a whole, and comprises an outer flange plate, an outer cylinder, bridging parts, an inner cylinder and an inner flange plate which are integrally formed, the outer flange plate, the outer cylinder, the inner cylinder and the inner flange plate are all formed to extend continuously over an entire circumference along a circumferential direction of the metal framework, the outer flange plate and the inner flange plate also extend along a radial direction of the metal framework, and the outer cylinder and the inner cylinder also extend along an axial direction of the metal framework; and
one axial side end of the outer cylinder is connected to a radial inner side end of the outer flange plate, the inner cylinder is located on a radial inner side of the outer cylinder, the outer cylinder is connected to the inner cylinder via the bridging parts, one axial side end of the inner cylinder is connected to a radial outer side end of the inner flange plate, and a framework through hole is formed in a central part of the inner flange plate.

Preferably, the other axial side end of the outer cylinder is connected to the other axial side end of the inner cylinder via a plurality of the bridging parts, and the plurality of the bridging parts are evenly distributed in a manner of being spaced apart from each other along the circumferential direction.

More preferably, the metal framework further comprises extension parts, the extension parts are connected to the inner cylinder, the extension parts extend from the other axial side end of the inner cylinder along the axial direction, and the extension parts also extend along the circumferential direction.

More preferably, a plurality of the extension parts and a plurality of the bridging parts are alternately distributed in the circumferential direction.

More preferably, the outer flange plate is formed with a plurality of positioning holes and a plurality of circulation holes passing through in the axial direction, and the plurality of positioning holes and the plurality of circulation holes are alternately distributed in the circumferential direction.

More preferably, the peripheral structure is formed by a high molecular polymer, and the peripheral structure is attached to the metal framework in such a manner that same covers the metal framework.

More preferably, exposure holes are formed at parts, corresponding to the positioning holes of the metal framework, of the peripheral structure, so that the positioning holes are exposed from the peripheral structure; and the peripheral structure is formed with a lower cover recess facing the upper cover, and the exposure holes are located at the bottom of the lower cover recess.

More preferably, the upper cover is formed with an upper cover recess opposite to the lower cover recess, the pillar bearing also comprises a first washer, a second washer and a cage, the first washer and the second washer are both formed with raceways for the rolling bodies to roll in, the first washer and the second washer are mounted in a mounting space formed by the lower cover recess and the upper cover recess, a plurality of the rolling bodies are mounted on the cage and held between the first washer and the second washer by the cage.

More preferably, the peripheral structure is formed with a peripheral structure through hole at the position where the framework through hole is located, and at the positions of the extension parts of the metal framework, the peripheral structure is formed with hook parts protruding toward a radial inner side.

The present application further provides a manufacturing method for a lower cover of a pillar bearing for a vehicle suspension described in any one of the above-mentioned technical solutions, the manufacturing method comprising:
stamping out a disc-shaped prefabricated member for forming a metal framework of the lower cover;
stretching the prefabricated member for the first time to form an outer flange plate and an outer cylinder;
reversely stretching the prefabricated member for the second time to form an inner flange plate and an inner cylinder;
performing cut-off processing on parts, located between the inner cylinder and the outer cylinder, of the prefabricated member to form bridging parts;
stretching parts, located between the bridging parts, of the prefabricated member for the third time to form extension parts of the metal framework; and
performing central stamping on the prefabricated member to form a framework through hole.

Preferably, a peripheral structure is formed on the metal framework through insertion molding, in the insertion molding process, the metal framework is positioned by means of a fixing hole of the metal framework, and a fluid high molecular polymer material flows from one side of the outer flange plate to the other side of the outer flange plate via circulation holes of the metal framework.

More preferably, the manufacturing method further comprises: after the prefabricated member is stretched for the first time, performing bottom remolding on the prefabricated member.

By adopting the above technical solutions, the present application provides a novel pillar bearing for a vehicle suspension. The pillar bearing comprises a lower cover, an upper cover and rolling bodies, which are assembled together, and a space for mounting the rolling bodies is defined between the lower cover and the upper cover which can rotate relative to each other. The lower cover comprises a metal framework and a peripheral structure, wherein the peripheral structure is attached to the metal framework in such a manner that same surrounds the metal framework, such that the metal framework is embedded inside the peripheral structure. Further, the metal framework is ring-shaped as a whole. The metal framework comprises an outer flange plate, an outer cylinder, bridging parts, an inner cylinder and an inner flange plate which are integrally formed.

Further, the outer flange plate, the outer cylinder, the inner cylinder and the inner flange plate are all formed to extend continuously over an entire circumference along a circumferential direction of the metal framework. The outer flange plate also extends along a radial direction of the metal framework, the outer cylinder extends along an axial direction of the metal framework, and one axial side end of the outer cylinder is connected to a radial inner side end of the outer flange plate. The inner cylinder is located on a radial inner side of the outer cylinder and extends along the axial direction, and the outer cylinder is connected to the inner cylinder via the bridging parts. The inner flange plate extends along the radial direction, and a radial outer side end of the inner flange plate is connected to one axial side end of the inner cylinder. A framework through hole is further formed in a central part of the inner flange plate.

In this way, since the metal framework is formed into an integral structure and is integrally embedded in the peripheral structure, compared with an existing pillar bearing described in the background art, the pillar bearing according to the present application is easy to mount and has lower costs. In addition, since the metal framework has reinforcement structures including the inner flange plate, the outer flange plate, the inner cylinder and the outer cylinder which are embedded in the peripheral structure, the structural strength of the bearing is more effectively enhanced.

Furthermore, the present application further provides the manufacturing method for the lower cover of the above-mentioned pillar bearing for the vehicle suspension, and the lower cover of the pillar bearing for the vehicle suspension is manufactured in a relatively simple manner by means of the steps of stamping and of stretching multiple times. Thereby, the pillar bearing for the vehicle suspension can be manufactured by a simple method.

### Brief Description of the Drawings

FIG. 1 is a schematic cross-sectional view showing a pillar bearing for a vehicle suspension, in which a section line is omitted.
FIG. 2A is a schematic perspective view showing a pillar bearing for a vehicle suspension according to an embodiment of the present application.
FIG. 2B is a schematic front view showing the pillar bearing for the vehicle suspension in FIG. 2A.
FIG. 2C is a schematic cross-sectional view showing the pillar bearing for the vehicle suspension in FIG. 2A, in which a section line is omitted.
FIG. 3A is a schematic perspective view showing a metal framework of the pillar bearing for the vehicle suspension in FIG. 2A.
FIG. 3B is a schematic cross-sectional view showing the metal framework in FIG. 3A, in which a section line is omitted.

### Detailed Description

Exemplary embodiments of the present invention are described below with reference to the attached drawings. It should be understood that these specific descriptions are only used to teach those skilled in the art how to implement the present application, and are neither intended to be exhaustive of all possible ways of the present application nor to limit the scope of the present application.

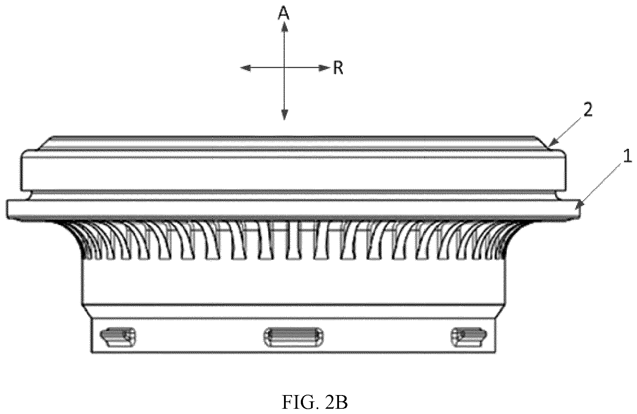

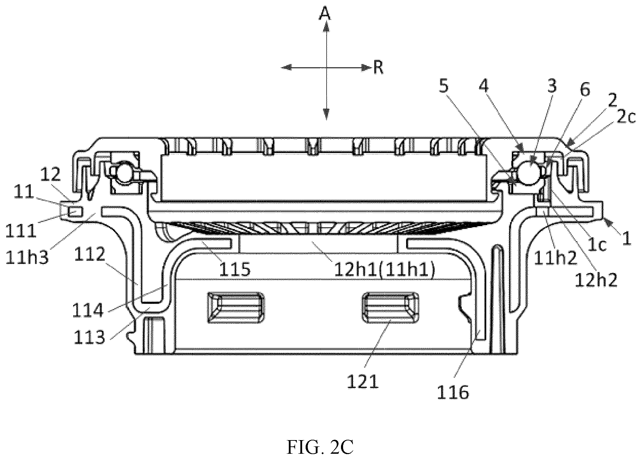

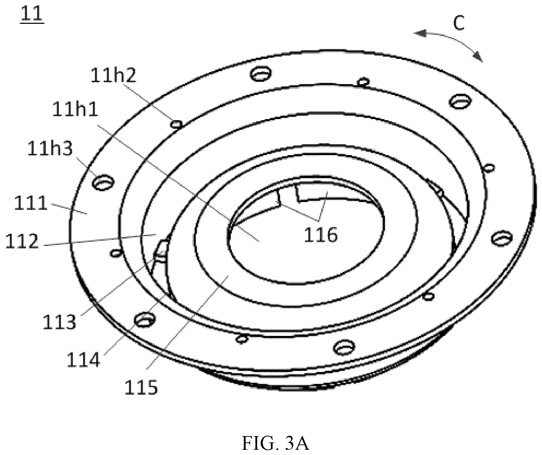

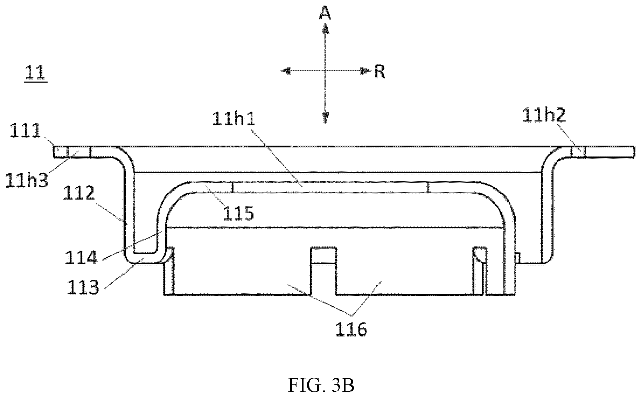

It should be noted that, unless otherwise specified, in the present application, "axial direction", "radial direction" and "circumferential direction" respectively refer to an axial direction, a radial direction and a circumferential direction of a pillar bearing (lower cover) for a vehicle suspension, "one axial side" refers to the upper side in FIG. 2C and FIG. 3B, and "the other axial side" refers to the lower side in FIG. 2C and FIG. 3B.

The structure of a pillar bearing for a vehicle suspension according to an embodiment of the present application will first be described below with reference to the drawings.

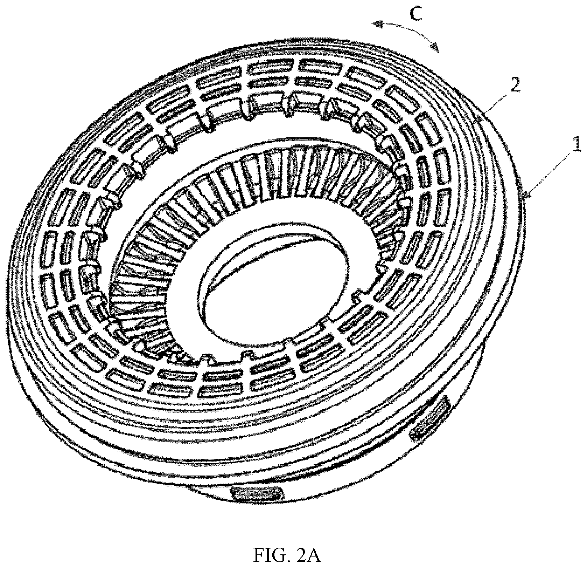

As shown in FIG. 2A to FIG. 2C, a pillar bearing (such as a thrust bearing) for a vehicle suspension according to an embodiment of the present application comprises a lower cover 1 (also referred to as a guide ring), an upper cover 2, rolling bodies 3, a first washer 4, a second washer 5 and a cage 6, which are assembled together. The lower cover 1 and the upper cover 2 can rotate relative to each other. The lower cover 1 is formed with a lower cover recess 1c that is open toward the upper cover 2, the upper cover 2 is formed with an upper cover recess 2c that is open toward the lower cover 1, and the lower cover recess 1c is opposite to the upper cover recess 2c in an axial direction A. In this way, at the positions of the lower cover recess 1c and the upper cover recess 2c, a mounting space for mounting the rolling bodies 3, the first washer 4, the second washer 5 and the cage 6 is defined by the lower cover 1 and the upper cover 2. The first washer 4 and the second washer 5 are both formed with raceways for the rolling bodies 3 to roll in, and the first washer 4 and the second washer 5 are mounted in the above-mentioned mounting space. A plurality of rolling bodies 3 are mounted on the cage 6 and held between the first washer 4 and the second washer 5 by the cage 6.

Specifically, in the present embodiment, as shown in FIG. 2C, the lower cover 1 comprises a metal framework 11 and a peripheral structure 12. The metal framework 11 is an integral structure, and the peripheral structure 12 is attached to the metal framework 11 in a manner that same surrounds the metal framework 11, such that the metal framework 11 is basically fully embedded inside the peripheral structure 12. Only parts, opposite to exposure holes 12h2, of the metal framework 11 are exposed, which occupy only a very small part of the metal framework 11 (less than 2% of a surface area). In this way, the metal framework 11 does not need to be coated with an anticorrosive coating as an external steel flange 103 described in the prior art, thereby avoiding the problems of environmental pollution and cost increase caused thereby.

As shown in FIG. 2C to FIG. 3B, the metal framework 11 is formed by metal such as steel, and the metal framework 11 is ring-shaped as a whole. Specifically, the metal framework 11 comprises an outer flange plate 111, an outer cylinder 112, a plurality of bridging parts 113, an inner cylinder 114, an inner flange plate 115 and extension parts 116, which are integrally formed. The outer flange plate 111, the outer cylinder 112, the inner cylinder 114, and the inner flange plate 115 are all formed to extend continuously over an entire circumference along a circumferential direction C, and a plurality of bridging parts 113 and a plurality of extension parts 116 are alternately distributed in the circumferential direction C.

As shown in FIG. 2C to FIG. 3B, the outer flange plate 111 not only extends along the circumferential direction C, but also extends along a radial direction R, so that the outer flange plate 111 is formed into a circular ring plate shape extending in the circumferential direction C and the radial direction R. The outer cylinder 112 extends not only in the circumferential direction C but also in the axial direction A, such that the outer cylinder 112 is formed into a cylindrical shape extending in the circumferential direction C and the axial direction A. One axial side end of the outer cylinder 112 is connected to a radial inner side end of the outer flange plate 111. The inner cylinder 114 is located on a radial inner side of the outer cylinder 112 and is spaced apart from the outer cylinder 112 in the radial direction R, and the inner cylinder 114 extends not only in the circumferential direction C but also in the axial direction A, such that the inner cylinder 114 is formed into a cylindrical shape extending in the circumferential direction C and the axial direction A. The outer cylinder 112 is connected to the inner cylinder 114 via a plurality of bridging parts 113 spaced apart from each other in the circumferential direction C. The inner flange plate 115 extends not only in the circumferential direction C but also in the radial direction R, such that the inner flange plate 115 is formed into a circular ring plate shape extending in the circumferential direction C and the radial direction R. A radial outer side end of the inner flange plate 115 is connected to one axial side end of the inner cylinder 114, and a framework through hole 11h1 is formed in a central part of the inner flange plate 115. A plurality of extension parts 116 spaced apart from each other in the circumferential direction C are connected to the inner cylinder 114, and the extension parts 116 extend from the other axial side end of the inner cylinder 114 along the axial direction A and the circumferential direction C.

Further, as shown in FIG. 2C to FIG. 3B, one axial side end of the outer cylinder 112 is located at a position that is close to one axial side compared with one axial side end of the inner cylinder 114, so the outer flange plate 111 is positioned at a position that is close to the axial side compared with the inner flange plate 115. In addition, the plurality of bridging parts 113 are connected to the other axial side end of the outer cylinder 112 and the other axial side end of the inner cylinder 114, so as to connect each part of the entire metal framework 11 as a whole. The plurality of bridging parts 113 are evenly distributed, spaced apart from each other along the circumferential direction C, the plurality of extension parts 116 are evenly distributed, spaced apart from each other along the circumferential direction C, and the bridging parts 113 and the extension parts 116 are alternately arranged in the circumferential direction C.

Further, as shown in FIG. 2C to FIG. 3B, the outer flange plate 111 is formed with a plurality of positioning holes 11h2 and a plurality of circulation holes 11h3 passing through in the axial direction A. The positioning holes 11h2 are located at positions that are close to a radial inner side compared with the circulation holes 11h3, and the diameter of the positioning holes 11h2 is smaller than the diameter of the circulation holes 11h3. The plurality of positioning holes 11h2 are evenly distributed in the circumferential direction C, the plurality of circulation holes 11h3 are evenly distributed in the circumferential direction C, and the plurality of positioning holes 11h2 and the plurality of circulation holes 11h3 are alternately distributed in the circumferential direction C. The plurality of positioning holes 11h2 and the plurality of circulation holes 11h3 are used to function in the insertion molding process of the lower cover 1. Specifically, in the insertion molding process of the lower cover 1, a positioning pin of a positioning device can position the metal framework 11 at a predetermined position via the plurality of positioning holes 11h2, and a high molecular polymer material in a fluid state can flow from one side of the flange plate 111 to the other side of the flange plate 111 via the circulation holes 11h3, thereby improving the flow performance and injection quality of the high molecular polymer material.

In the present embodiment, as shown in FIG. 2C, the peripheral structure 12 is formed by a hard high molecular polymer (plastic), and the peripheral structure 12 is attached to the metal framework 11 in such a manner that same almost completely surrounds the metal framework 11. Exposure holes 12h2 are formed at parts, corresponding to the positioning holes 11h2 of the metal framework 11, of the peripheral structure 12, so that the positioning holes 11h2 are exposed from the exposure holes 12h2. In addition, the exposure holes 12h2 are located at the bottom of the lower cover recess 1c. In this way, after the bearing is mounted completely, the exposure holes 12h2 can not only be at least partially covered by the second washer 5, but can also be filled with grease for lubrication.

Further, the peripheral structure 12 is formed with a through hole 12h1 of the peripheral structure at the position where the framework through hole 11h1 is located, so that a piston rod of a piston of a vehicle suspension system can pass through the through hole of the peripheral structure 12 from one side to extend to the other side. Further, at the positions of the extension parts 116 of the metal framework 11, the peripheral structure 12 is formed with hook parts 121 protruding toward a radial inner side, and the hook parts 121 are used for engaging with an outer wall of a buffer device of the suspension system.

The functions of each part of the lower cover 1 of a pillar bearing for a vehicle suspension system according to an embodiment of the present application will be described below. After the pillar bearing with the above structure is installed in place, a coil spring of the vehicle suspension system is mounted on a part, corresponding to the outer cylinder 112 of the metal framework 11, of the pillar bearing in a sleeving manner, and one end of the coil spring will abut against a part, corresponding to the outer flange plate 111 of the metal framework 11, of the bearing from below. Thus, the outer cylinder 112 and the outer flange plate 111 are used as a support structure for the coil spring while strengthening the structural strength of the lower cover 1 of the bearing. The outer cylinder 112 can absorb an acting force of the coil spring in the radial direction R, and the outer flange plate 111 can absorb a spring force of the coil spring in the axial direction A. Furthermore, a buffer device of the vehicle suspension system is inserted into a part, corresponding to the inner cylinder 114 of the metal framework 11, of the bearing, and one end of the buffer device will abut against a part, corresponding to the inner flange plate 115 of the metal framework 11, of the bearing from below. Thus the inner cylinder 114 and the inner flange plate 115 are used as a support structure of the buffer device while strengthening the structural strength of the lower cover 1 of the bearing. The inner cylinder 114 can absorb an acting force of the buffer device in the radial direction R, and the inner flange plate 115 can absorb an acting force of the inner cylinder 114 in the axial direction A. In addition, the extension parts 116, as extension parts of the inner cylinder 114 in the axial direction A, mainly play a role in strengthening the part of the peripheral structure 12 where the hook parts 121 are disposed.

A manufacturing method for a lower cover 1 of a pillar bearing for a vehicle suspension according to an embodiment of the present application will be described below.

First, a manufacturing method for a metal framework 11 of the lower cover 1 is described, the manufacturing method comprising the following machining steps:
stamping out a disc-shaped prefabricated member for forming the metal framework 11 from a metal plate such as a steel plate;
stretching the prefabricated member for the first time to stretch the disc-shaped prefabricated member into a cup shape, thereby forming an outer flange plate 111 and an outer cylinder 112;
performing bottom remolding on the prefabricated member to perform fine processing on a part of the prefabricated member used to form an inner flange plate 115 and an inner cylinder 114, avoiding undesired shapes in the following reverse second stretching process;
performing a second stretching, which is reverse to the first stretching, on the prefabricated member to form an inner flange plate 115 and an inner cylinder 114;
performing cut-off processing on parts, located between the inner cylinder 114 and the outer cylinder 112, of the prefabricated member to form bridging parts 113;
stretching parts, located between the bridging parts 113, of the prefabricated member for the third time to form extension parts 116 of the metal framework 11; and
stamping the prefabricated member to form a framework through hole 11h1 at a central part of the prefabricated member, thereby forming the metal framework 11.

Further, after the metal framework 11 is manufactured by the above method, a peripheral structure 12 is formed on the metal framework 11 by insertion molding. In the insertion molding process, the metal framework 11 is positioned by means of a fixing hole of the metal framework 11, and a fluid high molecular polymer material flows from one side of the outer flange plate 111 to the other side of the outer flange plate 111 via a circulation hole 11h3 of the metal framework 11.

Finally, the lower cover 1 of the pillar bearing for the vehicle suspension according to an embodiment of the present application is manufactured by the above method.

Naturally, the present invention is not limited to the above-mentioned embodiments, and those skilled in the art could make various modifications to the above-mentioned embodiments under the teaching of the present application without departing from the scope of the present application. For this reason, the following explanation is also made.
i. Although it is not explicitly explained in the above-mentioned embodiments, it can be understood that the exposure holes 12h2 of the peripheral structure 12 are formed by the positioning pin in the insertion molding process of the lower cover 1, and does not belong to the functional structural features of the pillar bearing of the present application. Moreover, after the pillar bearing is mounted completely, the exposure holes 12h2 are at least partially covered by the second washer 5 and filled with grease, so that the structure performance and other performance of the lower cover 1 will not be adversely affected.
ii. The two flanges 102 and 103 described in the Background Art are replaced by the integral metal framework 11, which can achieve the same function as the two flanges 102 and 103, but has lower costs and is easier to assemble, thereby improving the production efficiency of the pillar bearing according to the present application.

### LIST OF REFERENCE NUMERALS

- 10: lower cover
- 101: lower cover main body
- 102: embedded steel flange
- 103: external steel flange
- 20: upper cover
- 30: rolling body
- 40: upper washer
- 50: lower washer
- 60: cage
- 1: lower cover
- 1c: lower cover recess
- 11: metal framework
- 12: peripheral structure
- 2: upper cover
- 2c: upper cover recess
- 3: rolling body
- 4: first washer
- 5: second washer
- 6: cage
- 111: outer flange plate
- 112: outer cylinder
- 113: bridging part
- 114: inner cylinder
- 115: inner flange plate
- 116: extension part
- 11h1: framework through hole
- 11h2: positioning hole
- 11h3: circulation hole
- 12h1: peripheral structure through hole
- 12h2: exposure hole
- 121: hook part
- A: axial direction
- R: radial direction
- C: circumferential direction.

## Claims

1. A pillar bearing for a vehicle suspension, comprising a lower cover (1), an upper cover (2) and rolling bodies (3), which are assembled together, wherein the lower cover (1) and the upper cover (2) can rotate relative to each other, a space for mounting the rolling bodies (3) is defined between the lower cover (1) and the upper cover (2), the lower cover (1) comprises a metal framework (11) and a peripheral structure (12), and the peripheral structure (12) is attached to the metal framework (11) in such a manner that same surrounds the metal framework (11), such that the metal framework (11) is embedded inside the peripheral structure (12);
the metal framework (11) is ring-shaped as a whole, the metal framework (11) comprises an outer flange plate (111), an outer cylinder (112), bridging parts (113), an inner cylinder (114) and an inner flange plate (115), which are integrally formed, the outer flange plate (111), the outer cylinder (112), the inner cylinder (114) and the inner flange plate (115) are all formed to extend continuously over an entire circumference along a circumferential direction (C) of the metal framework (11), the outer flange plate (111) and the inner flange plate (115) also extend along a radial direction (R) of the metal framework (11), and the outer cylinder (112) and the inner cylinder (114) also extend along an axial direction (A) of the metal framework (11); and
one axial side end of the outer cylinder (112) is connected to a radial inner side end of the outer flange plate (111), the inner cylinder (114) is located on a radial inner side of the outer cylinder (112), the outer cylinder (112) is connected to the inner cylinder (114) via the bridging parts (113), one axial side end of the inner cylinder (114) is connected to a radial outer side end of the inner flange plate (115), and a framework through hole (11h1) is formed in a central part of the inner flange plate (115).

2. The pillar bearing for the vehicle suspension according to Claim 1, **characterized in that** the other axial side end of the outer cylinder (112) is connected to the other axial side end of the inner cylinder (114) via a plurality of the bridging parts (113), and the plurality of the bridging parts (113) are evenly distributed in a manner of being spaced apart from each other along the circumferential direction (C).

3. The pillar bearing for the vehicle suspension according to Claim 2, **characterized in that** the metal framework (11) further comprises extension parts (116), the extension parts (116) are connected to the inner cylinder (114), the extension parts (116) extend from the other axial side end of the inner cylinder (114) along the axial direction (A), and the extension parts (116) also extend along the circumferential direction (C).

4. The pillar bearing for the vehicle suspension according to Claim 3, **characterized in that** a plurality of the extension parts (116) and a plurality of the bridging parts (113) are alternately distributed in the circumferential direction (C).

5. The pillar bearing for the vehicle suspension according to any one of Claims 1 to 4, **characterized in that** the outer flange plate (111) is formed with a plurality of positioning holes (11h2) and a plurality of circulation holes (11h3) passing through in the axial direction (A), and the plurality of positioning holes (11h2) and the plurality of circulation holes (11h3) are alternately distributed in the circumferential direction (C).

6. The pillar bearing for the vehicle suspension according to any one of Claims 1 to 5, **characterized in that** the peripheral structure (12) is formed by a high molecular polymer, and the peripheral structure (12) is attached to the metal framework (11) in such a manner that same covers the metal framework (11).

7. The pillar bearing for the vehicle suspension according to Claim 6, **characterized in that** exposure holes (12h2) are formed at parts, corresponding to the positioning holes (11h2) of the metal framework (11), of the peripheral structure (12), so that the positioning holes (11h2) are exposed from the peripheral structure (12); and the peripheral structure (12) is formed with a lower cover recess (1c) facing the upper cover (2), and the exposure holes (12h2) are located at the bottom of the lower cover recess (1c).

8. The pillar bearing for the vehicle suspension according to Claim 7, **characterized in that** the upper cover (2) is formed with an upper cover recess (2c) opposite to the lower cover recess (1c), the pillar bearing also comprises a first washer (4), a second washer (5) and a cage (6), the first washer (4) and the second washer (5) are both formed with raceways for the rolling bodies (3) to roll in, the first washer (4) and the second washer (5) are mounted in a mounting space formed by the lower cover recess (1c) and the upper cover recess (2c), and a plurality of the rolling bodies (3) are mounted on the cage (6) and held between the first washer (4) and the second washer (5) by the cage (6).

9. The pillar bearing for the vehicle suspension according to any one of Claims 6 to 8, **characterized in that** the peripheral structure (12) is formed with a peripheral structure through hole (12h1) at the position where the framework through hole (l1h1) is located, and at the positions of the extension parts (116) of the metal framework (11), the peripheral structure (12) is formed with hook parts (121) protruding toward a radial inner side.

10. A manufacturing method for a lower cover of a pillar bearing for a vehicle suspension according to any one of Claims 1 to 9, the manufacturing method comprising:
stamping out a disc-shaped prefabricated member for forming a metal framework (11) of the lower cover (1);
stretching the prefabricated member for the first time to form an outer flange plate (111) and an outer cylinder (112);
reversely stretching the prefabricated member for the second time to form an inner flange plate (115) and an inner cylinder (114);
performing cut-off processing on parts, located between the inner cylinder (114) and the outer cylinder (112), of the prefabricated member to form bridging parts (113);
stretching parts, located between the bridging parts (113), of the prefabricated member for the third time to form extension parts (116) of the metal framework (11); and
performing central stamping on the prefabricated member to form a framework through hole (11h1).

11. The manufacturing method for the lower cover of the pillar bearing for the vehicle suspension according to Claim 10, **characterized in that** a peripheral structure (12) is formed on the metal framework (11) through insertion molding,
in the insertion molding process, the metal framework (11) is positioned by means of a fixing hole of the metal framework (11), and a fluid high molecular polymer material flows from one side of the outer flange plate (111) to the other side of the outer flange plate (111) via the circulation holes (11 h3) of the metal framework (11).

12. The manufacturing method for the lower cover of the pillar bearing for the vehicle suspension according to Claim 10 or 11, **characterized in that** the manufacturing method further comprises:
after the prefabricated member is stretched for the first time, performing bottom remolding on the prefabricated member.
